# DEMANDE DE BREVET EUROPEEN

(11) **EP 1 120 949 A1**
(43) Date de publication de la demande: **01.08.2001**
(21) Numéro de dépôt: 01420016.6
(22) Date de dépôt: 23.01.2001
(51) Int. Cl.: H04M 3/18, H02H 9/02, H04Q 1/14

(54) **Circuit et dispositif limiteur du courant et installation téléphonique incorporant un tel dispositif**

(30) Priorité: 27.01.2000 FR 0001067
(71) Demandeur: MECELEC INDUSTRIES, F-07300 Tournon sur Rhône (FR)
(72) Inventeur: Benoist, Etienne, 07300 Saint-Jean-de-Muzols (FR); Sellier, Christian, 07300 Tournon (FR)
(74) Mandataire: Myon, Gérard Jean-Pierre

(57) **Abrégé**

Circuit limiteur du courant (I) circulant dans une paire de conducteurs (1, 2) d'une installation téléphonique, ledit circuit (C) comprenant, sur chaque conducteur (1, 2), un ensemble de limitation de courant (E₁, E₂) incluant une résistance (R₁, R₂), caractérisé en ce que chaque ensemble de limitation de courant est formé par un dipole (E₁, E₂) comprenant, en parallèle et exclusivement :
- une résistance (R₁, R₂) de limitation de courant de valeur comprise entre 100 et 300 Ω ;
- un condensateur miniaturisé (C₁, C₂) de capacité comprise entre 10 et 60 µF et
- une diode bidirectionnelle (D₁, D₂) à action rapide par pincement, pour la protection contre les surtensions, dont les valeurs de seuil sont comprises entre 10 et 20 V.

## Description

L'invention a trait à un circuit limiteur du courant circulant dans une paire de conducteurs, à un dispositif de contrôle et/ou de régulation d'un paramètre physique du courant circulant dans une telle paire et à une installation téléphonique équipée d'au moins d'un tel circuit.

Dans le domaine de la téléphonie, il est connu que certains paramètres du courant transitant dans une paire de conducteurs doivent être contrôlés, et en particulier limités, pour des questions de sécurité. Dans certains pays, les centraux téléphoniques sont équipés, pour chaque paire de conducteurs, d'un dispositif de limitation de courant, disposé au niveau du connecteur d'entrée ou de sortie du central ou sur des circuits téléphoniques spécifiques. Dans d'autres pays, dont la France, les centraux téléphoniques ne sont pas équipés d'un tel dispositif et il est requis de tous les téléphones raccordés au réseau qu'ils soient équipés d'un dispositif limiteur de courant, ce qui majore d'autant le prix de revient des appareils et ne permet pas nécessairement l'utilisation d'appareils acquis dans un autre état. La modification de l'ensemble des centraux téléphoniques d'un pays pour incorporer des cartes téléphoniques pourvues de limiteur de courant ou pour modifier les connecteurs d'entrée et/ou de sortie de centraux induirait une charge financière considérable, de telle sorte que les opérateurs des pays concernés ont, jusqu'à présent, renoncé à cette modification.

On pourrait envisager d'équiper chaque paire de conducteurs ou jarretière d'un central téléphonique d'un circuit comprenant, sur chaque conducteur, un ensemble de limitation de courant comprenant une résistance. Un tel dispositif fonctionne correctement pour la limitation du courant continu. Cependant, le signal téléphonique est véhiculé par un courant alternatif basse fréquence et l'on doit envisager l'utilisation d'un ou plusieurs condensateurs en conjonction avec la résistance pour ne pas amortir ce signal. Compte tenu des fréquences relativement basses du courant véhiculé dans le signal, des condensateurs à capacité élevée devraient être utilisés afin que leur impédance, qui est inversement proportionnelle à la fréquence du courant, ne filtre pas sensiblement les composantes basse fréquence du courant.

Cependant, les condensateurs à capacité élevée ont un encombrement et un prix de revient tels que l'homme du métier préjuge qu'ils ne peuvent pas être intégrés dans un dispositif qui doit être produit en très grande série avec un prix de revient minimum et qui présente un encombrement minimal en vue de son intégration dans des installations existantes. C'est pourquoi, jusqu'à présent, il n'a pas été réalisé d'ensembles de filtration intégrant principalement une résistance et un condensateur de limitation du courant. Dans les systèmes connus, des diodes zener mono-directionnelles sont prévues dans des circuits limiteurs de courant et sont éventuellement associées à des condensateurs de type chimique qui ont un sens de polarisation prédéterminé. Le courant circulant dans une paire de conducteurs peut être inversé au cours du fonctionnement d'une installation téléphonique. Les composants électroniques précités doivent donc être prévus pour chaque sens du courant, c'est-à-dire en double, ce qui majore d'autant le prix de revient et l'encombrement des dispositifs connus. En outre, dans les dispositifs connus, des systèmes de filtre sont généralement installés entre des ensembles de limitation de courant prévus sur les deux conducteurs d'une paire, ce qui, là encore, majore le prix de revient et l'encombrement du dispositif.

Pour toutes les raisons qui précèdent, les systèmes de l'état de la technique ne donnent pas entièrement satisfaction. L'invention vise à proposer un circuit limiteur de courant qui est sensiblement plus économique que ceux de l'état de la technique alors que son encombrement est très limité.

Dans cet esprit, l'invention concerne un circuit limiteur du courant circulant dans une paire de conducteurs d'une installation téléphonique, ce circuit comprenant, sur chaque conducteur, un ensemble de limitation de courant incluant une résistance, caractérisé en ce que chaque ensemble de limitation de courant est formé par un dipole comprenant, en parallèle et exclusivement :
- une résistance de limitation de courant de valeur comprise entre 100 et 300 Ω ;
- un condensateur miniaturisé de capacité comprise entre 10 et 60 *µ*F et
- une diode bidirectionnelle à action rapide par pincement, pour la protection contre les surtensions, dont les valeurs de seuil sont comprises entre 10 et 20 V.

L'invention tire partie du fait que, contre le préjugé de l'homme du métier, il est possible d'utiliser des condensateurs de capacité comprise entre 10 et 60 *µ*F dont l'encombrement n'est pas trop important et qui ne doivent pas nécessairement être de type chimique. Ces condensateurs peuvent notamment être de type CMS (composants montables en surface) et sont efficacement miniaturisés. Dans le dipole de l'invention, la résistance sert à la limitation de courant alors que le condensateur permet le passage d'un signal alternatif, y compris basse fréquence, et que la diode bidirectionnelle permet de protéger l'ensemble formé de la résistance et du condensateur en cas de surtension supérieure à sa valeur de seuil aux bornes du dipole ainsi constitué. En d'autres termes, la fonction de limitation du courant est obtenue grâce à la résistance alors que la diode bidirectionnelle a une fonction de sécurité permettant d'éviter un endommagement de la résistance et/ou de la capacité en cas de surtension dans la paire de conducteurs.

Selon des aspects avantageux mais non obligatoires de l'invention, le circuit incorpore une ou plusieurs des caractéristiques suivantes :
- La résistance a une valeur de l'ordre de 200 Ω alors que le condensateur a une capacité de l'ordre de 20 µF et que les valeurs de seuil de la diode bidirectionnelle sont de l'ordre de 15 V.
- Le condensateur est un condensateur multi-couches à base de céramique réalisé par la technique dite "CMS".
- Le circuit est réalisé sur les deux faces opposées d'une languette, un ensemble de limitation de courant étant formé sur chaque face de cette languette.

L'invention concerne également un dispositif de contrôle et/ou de régulation d'un paramètre physique du courant circulant dans une paire de conducteurs d'une installation téléphonique qui comprend un circuit tel que précédemment décrit. Un tel dispositif remplit efficacement sa fonction alors qu'il est d'un prix de revient attractif et d'une grande compacité.

On peut prévoir que ce dispositif comprend une languette dont une extrémité est apte à être insérée dans une borne d'un ensemble de connexion de l'installation, cette languette étant équipée d'un ensemble de limitation de courant sur chacune de ses deux faces opposées. Dans ce cas, le dispositif comprend avantageusement deux coiffes de protection des ensembles précités, chaque coiffe étant encliquetable sur la languette dans une position où elle isole un ensemble de courant par rapport à l'extérieur. On peut prévoir que chaque coiffe est pourvue d'un téton de blocage apte à pénétrer dans un orifice de forme correspondante ménagé dans la languette. Dans ce cas, la coiffe peut être pourvue d'une extension globalement plane apte à être plaquée sur la languette, le téton faisant saillie à partir de cette extension.

L'invention concerne également une installation téléphonique, et notamment un central téléphonique, qui est équipé d'au moins un circuit tel que précédemment décrit. Une telle installation est sécurisée à l'encontre d'un courant trop important, indépendamment des équipements qui sont branchés sur cette installation, à savoir des terminaux téléphoniques ou télématiques, tels qu'un poste téléphonique, un télécopieur, un modem, un terminal de type Minitel (marque déposée), etc ...

L'invention sera mieux comprise et d'autres avantages de celle-ci apparaîtront plus clairement à la lumière de la description qui va suivre d'un mode de réalisation d'un dispositif de contrôle et/ou de régulation du courant dans une installation téléphonique conforme à son principe, donnée uniquement à titre d'exemple et faite aux dessins annexés, dans lesquels :
- la figure 1 est un schéma de principe d'un circuit conforme à l'invention ;
- la figure 2 est une vue en perspective éclatée d'un dispositif de contrôle conforme à l'invention et
- la figure 3 est une vue de dessus du dispositif de la figure 2.

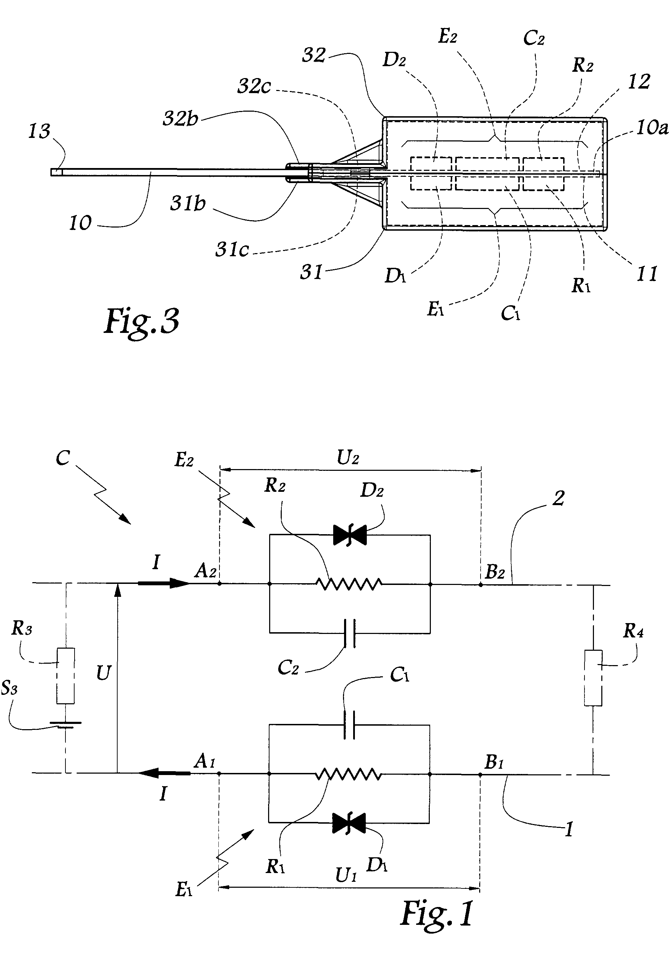

Le circuit C représenté à la figure 1 est destiné à être branché sur les conducteurs 1 et 2 d'une paire P de conducteurs appartenant à un central téléphonique. Le circuit C comprend un premier ensemble E₁ de limitation de courant branché en série sur le conducteur 1 et comprenant, en parallèle, une résistance R₁ de valeur égale à environ 200 Ω, un condensateur C₁ de valeur égale à environ 20 µF et une diode bidirectionnelle D₁ dont les deux valeurs de seuil ou de coupure sont égales à environ 15 V.

La diode D₁ est bloquante lorsque la tension à laquelle elle est soumise aux bornes de l'ensemble E₁ qui forme un dipole, est inférieure à ses deux valeurs de seuil alors qu'elle est passante lorsque la tension est supérieure à ses deux valeurs de seuil. La diode D₁ peut être du type connu sous la dénomination commerciale de diode TRANSIL (marque déposée. La diode D₁ est une diode à action rapide par pincement ou "clamping". Elle est efficace quel que soit le signe de la tension à ses bornes.

Un second ensemble ou dipole E₂ est monté en série sur le conducteur 2 et comprend une résistance R₂, un condensteur C₂ et une diode D₂ identiques aux éléments R₁, C₁ et D₁.

Le fonctionnement est le suivant :

On suppose que la tension U entre les conducteurs 1 et 2 est inférieure ou égale à 48 V, conformément aux normes en vigueur dans les installations téléphoniques. En considérant qu'un central téléphonique est raccordé sur la gauche du circuit C à la figure 1 alors qu'un site d'utilisation est raccordé sur la droite, une résistance R₃ peut être considérée comme branchée entre les conducteurs 1 et 2 et une source S₃ de potentiel, cette résistance R₃ étant représentative de la résistance interne du central, alors qu'une résistance R₄ est branchée entre les conducteurs 1 et 2 du côté du site d'utilisation, cette résistance étant représentative de la résistance de la ligne et, éventuellement, de celle de l'appareil branché sur cette ligne.

Compte tenu des résistances R₃ et R₄, la tension maximale U₁ à laquelle est soumis le dipole E₁ entre ses points de jonction A₁ et B₁ au conducteur 1 est de l'ordre de 12 V, de même que la tension correspondante U₂ entre les points de jonction A₂ et B₂ de l'ensemble E₂ sur le conducteur 2. En tenant compte de la valeur des résistances R₁ et R₂ égale à environ 200 Ω, le courant maximum transitant dans les conducteurs 1 et 2 est donc de 12/200 = 0,06 A = 60 mA, ce qui donne satisfaction dans la plupart des installations téléphoniques.

La valeur du condensateur C est déterminée afin que les dipoles E₁ et E₂ soient "transparents" aux courants alternatifs basse fréquence de la bande de base de la téléphonie. Ces courants ont une fréquence de l'ordre de 300 Hz et il s'avère en pratique qu'une capacité d'environ 20 *µ*F donne satisfaction dans les conditions habituelles d'utilisation.

Les condensateurs C₁ et C₂ ont donc une valeur de l'ordre de 20 *µ*F et ils peuvent être choisis dans la gamme commercialisée par la société MURATA sous les références GRM. Ces condensateurs à base de céramique sont fabriqués par la technologie dite CMS et présentent une excellente compacité alors qu'ils sont aptes à fonctionner indépendamment du sens du courant I dans la paire de conducteurs 1 et 2 car ils ne sont pas polarisés.

Les diodes D₁ et D₂ sont dimensionnées afin de protéger le dipole si les tensions aux bornes des dipoles E₁ et E₂ dépassent les valeurs maximales U₁ et U₂ précitées, c'est-à-dire 12 V. En pratique, on peut choisir ces valeurs de seuil égales à environ 15 V, de telle sorte que la diode devient passante en cas de surtension passagère dans la paire de conducteurs E₁ et E₂, ce qui peut se produire en cas d'orage, notamment du fait de la foudre.

En cas de surtension transitoire importante, des dispositifs appropriés dénommés para-surtenseurs sont aptes à réagir pour réduire la tension entre les conducteurs 1 et 2, donc les tensions U₁ et U₂.

Les valeurs numériques précitées des composants R₁, R₂, C₁, C₂, D₁ et D₂ donnent toute satisfaction. Ces valeurs peuvent cependant varier, en donnant également satisfaction, dans les plages suivantes :
- la résistance peut avoir une valeur comprise entre 100 et 300 Ω ;
- le condensateur peut avoir une capacité comprise entre 10 et 60 *µ*F et
- les valeurs de seuil des diodes bidirectionnelles peuvent être comprises entre 10 et 20 V.

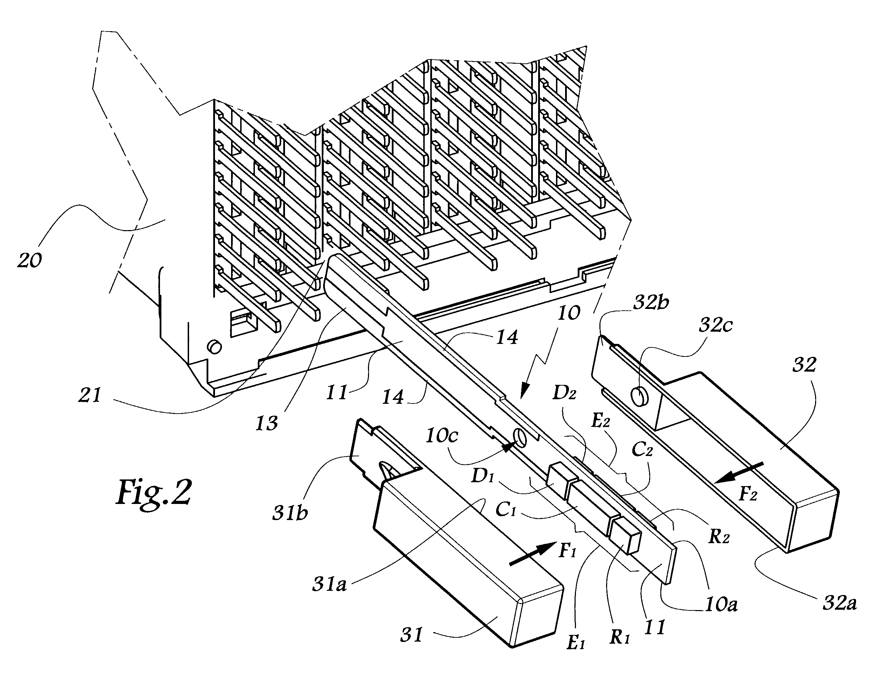

Comme il ressort plus particulièrement des figures 2 et 3, le circuit C est formé sur les deux faces opposées 11 et 12 d'une languette 10 de forme alongée dont une extrémité 13 est prévue pour être introduite dans une borne 21 d'un ensemble de raccordement 20 d'une installation téléphonique.

Sur chaque face 11 et 12 sont prévues des pistes sérigraphiées 14 constituant des lignes d'alimentation des dipoles E₁ et E₂ respectivement formés sur les faces 11 et 12 à distance de cette extrémité.

Compte tenu de la géométrie de la languette 10, celle-ci est aisément manipulable et la forme de son extrémité est compatible avec la géométrie des bornes 21 standard dans le domaine de la téléphonie.

Les dipoles E₁ et E₂ sont respectivement protégés par des coiffes 31 et 32 définissant chacune un volume concave et aptes à être encliquetées sur la languette 10. Chaque coiffe 31 et 32 comprend un bord 31a ou 32a prévu pour venir en recouvrement partiel d'un bord 10a de la languette 10. Chaque languette 31 et 32 comprend également une extension 31b ou 32b globalement plane et destinée à venir en appui surfacique contre l'une des faces 11 et 12. Dans chaque extension 31b et 32b est prévu un téton ou pion de blocage 31c ou 32c destiné à être engagé dans un orifice 10c de la languette 10.

Les formes respectives des coiffes et de la languette sont telles que ces coiffes sont aisément mises en place sur la languette par un mouvement de rapprochement représenté par les flèches F₁ et F₂ à la figure 2, cette opération d'encliquetage des coiffes sur la languette étant réalisée avant insertion de l'extrémité 13 dans la borne 21.

## Revendications

1. Circuit limiteur du courant circulant dans une paire de conducteurs (1, 2) d'une installation téléphonique, ledit circuit (C) comprenant, sur chaque conducteur, un ensemble de limitation de courant incluant une résistance, caractérisé en ce que chaque ensemble de limitation de courant (I) est formé par un dipole (E₁, E₂) comprenant, en parallèle et exclusivement :
- une résistance (R₁, R₂) de limitation de courant de valeur comprise entre 100 et 300 Ω ;
- un condensateur miniaturisé (C₁, C₂) de capacité comprise entre 10 et 60 *µ*F et
- une diode bidirectionnelle (D₁, D₂) à action rapide par pincement, pour la protection contre les surtensions, dont les valeurs de seuil sont comprises entre 10 et 20 V.

2. Circuit selon la revendication 1, caractérisé en que ladite résistance (R₁, R₂) a une valeur de l'ordre de 200 Ω alors que ledit condensateur (C₁, C₂) a une capacité de l'ordre de 20 *µ*F et que lesdites valeurs de seuil sont de l'ordre de 15 V.

3. Circuit selon l'une des revendications précédentes, caractérisé en ce que ledit condensateur est un condensateur multi-couches (C₁, C₂) à base de céramique réalisé par la technique dite CMS.

4. Circuit selon l'une des revendications précédentes, caractérisé en ce qu'il est réalisé sur les deux faces opposées (11, 12) d'une languette (10), un ensemble de limitation de courant (E₁, E₂) étant formé sur chaque face de ladite languette.

5. Dispositif de contrôle et/ou de régulation d'un paramètre physique du courant (I) circulant dans une paire de conducteurs (1, 2) d'une installation téléphonique, caractérisé en ce qu'il comprend un circuit (C) selon l'une des revendications précédentes.

6. Dispositif selon la revendication 5, caractérisé en ce qu'il comprend une languette (10) dont une extrémité (13) est apte à être insérée dans une borne (21) d'un ensemble de connexion (20) de ladite installation, ladite languette étant équipée d'un ensemble de limitation de courant (E₁, E₂) sur chacune de ses faces opposées (11, 12).

7. Dispositif selon la revendication 6, caractérisé en ce qu'il comprend deux coiffes (31, 32) de protection desdits ensembles, chaque coiffe étant encliquetable sur ladite languette (10) dans une position où elle isole un ensemble de limitation de courant (E₁, E₂) par rapport à l'extérieur.

8. Dispositif selon la revendication 7, caractérisé en ce que chaque coiffe (31, 32) est pourvue d'un téton de blocage (31c, 32c) apte à pénétrer dans un orifice (10c) de forme correspondante ménagé dans ladite languette (10).

9. Dispositif selon la revendication 8, caractérisé en ce que chaque coiffe (31, 32) est pourvue d'une extension globalement plane ( 31b, 32b) apte à être plaquée sur ladite languette (10), ledit téton (31c, 32c) faisant saillie à partir de ladite extension.

10. Installation téléphonique, notamment central téléphonique, caractérisée en ce qu'elle est équipée d'au moins un dispositif (10, 31, 32, C, E₁, E₂) selon l'une des revendications 5 à 9.
